# EUROPÄISCHE PATENTSCHRIFT

(11) **EP 2 606 519 B1**
(45) Veröffentlichungstag und Bekanntmachung des Hinweises auf die Patenterteilung: **16.08.2017**
(21) Anmeldenummer: 11757197.6
(22) Anmeldetag: 18.08.2011
(51) Int. Cl.: H01M 2/02, H01M 12/06, H01M 12/08, H01M 2/04

(54) **METALL-LUFT-ZELLE MIT HOHER KAPAZITÄT**
METAL-AIR CELL HAVING HIGH CAPACITY
PILE MÉTAL-AIR DE HAUTE CAPACITÉ

(30) Priorität: 20.08.2010 DE 102010039557
(43) Veröffentlichungstag der Anmeldung: 26.06.2013
(73) Patentinhaber: VARTA Microbattery GmbH, 73479 Ellwangen (DE)
(72) Erfinder: GAUGLER, Winfried, 73479 Ellwangen-Eigenzell (DE); BARENTHIN, Wolf-U., 73479 Ellwangen (DE); BRENNER, Rolf, 73479 Ellwangen (DE)
(74) Vertreter: Patentanwaltskanzlei Cartagena
(86) Internationale Anmeldenummer: PCT/EP2011/064209
(87) Internationale Veröffentlichungsnummer: WO 2012/022778

(56) Entgegenhaltungen:
- US-A- 4 118 544
- US-A1- 2007 054 168
- US-B1- 6 284 400

## Beschreibung

Die vorliegende Erfindung betrifft eine Metall-Luft-Knopfzelle, insbesondere eine Zink-Luft-Knopfzelle.

Metall-Luft-Zellen umfassen als elektrochemische Aktivkomponenten in der Regel stets eine metallbasierte Anode und eine Luft-Kathode, die durch einen ionenleitfähigen Elektrolyten voneinander getrennt sind. Bei der Entladung wird an der Luft-Kathode Sauerstoff unter Elektronenaufnahme reduziert. Es entstehen Hydroxidionen, die über den Elektrolyten zur Anode wandern können. Dort wird ein Metall unter Elektronenabgabe oxidiert. Die entstehenden Metallionen reagieren mit den Hydroxidionen ab.

Es sind sowohl primäre als auch sekundäre Metall-Luft-Zellen entwickelt worden. Eine sekundäre Metall-Luft-Zelle wird wieder aufgeladen, indem zwischen Anode und Kathode eine Spannung angelegt und die beschriebene elektrochemische Reaktion umgekehrt wird. Dabei wird Sauerstoff freigesetzt.

Das bekannteste Beispiel einer Metall-Luft-Zelle ist die Zink-Luft-Zelle. Diese findet in Knopfzellenform insbesondere als Batterie für Hörgeräte Verwendung.

Bei Knopfzellen handelt es sich bekanntlich um Zellen mit einem Verhältnis von Höhe zu Durchmesser < 1. Sie weisen in der Regel ein flüssigkeitsdicht verschlossenes Gehäuse aus einem napfförmigen Zellenbecher, einem napfförmigen Zellendeckel und einer Dichtung auf. Zellenbecher und Zellendeckel weisen üblicherweise jeweils einen Boden, einen umlaufenden Mantel, einen den Boden und den Mantel verbindenden Übergangsbereich und eine endständige Schnittkante auf.

Der Boden des Zellenbechers und der Boden des Zellendeckels sind bevorzugt jeweils eben und vorzugsweise kreisförmig, gegebenenfalls auch oval, ausgebildet. Der Mantel des Zellenbechers und der Mantel des Zellendeckels lassen sich bevorzugt als ringförmige Segmente eines Hohlzylinders mit kreisförmigem oder ovalem Querschnitt beschreiben. In der Regel sind die Mäntel von Zellenbecher und Zellendeckel orthogonal zu den dazugehörigen Böden ausgerichtet.

Die erwähnten Übergangsbereiche von Zellenbecher und Zellendeckel umfassen bevorzugt die Teile von Zellenbecher und Zellendeckel, die außerhalb der Ebene des jeweiligen Bodens liegen, aber noch nicht Teil des dazugehörigen Mantels sind. Die Übergangsbereiche können abgerundet ausgebildet sein, beispielsweise schulterförmig, oder auch die Form einer scharfen Kante haben.

Zellenbecher und Zellendeckel sind bevorzugt aus metallischen Materialien wie vernickeltem Stahl oder Blech gefertigt. Weiterhin geeignet sind insbesondere auch Trimetalle, beispielsweise mit der Abfolge Nickel, Stahl und Kupfer (von außen nach innen).

Bei der Montage eines Knopfzellengehäuses wird der Zellendeckel mit der Schnittkante voraus in den Zellenbecher eingeschoben. Räumlich und elektrisch sind die beiden Teile im resultierenden Gehäuse durch die erwähnte Dichtung voneinander getrennt, die somit nicht nur dichtende Funktionen wahrnimmt sondern auch isolierende. Weiterhin sind im resultierenden Gehäuse die Böden von Zellenbecher und Zellendeckel parallel zueinander angeordnet. Der Abstand der Böden definiert die Höhe der Knopfzelle, die Verbindungsgerade durch die Mittelpunkte der Böden die Bezugsachse (axiale Richtung) entlang der bei der Montage der Knopfzelle das Einschieben des Zellendeckels in den Zellenbecher erfolgt.

Der Zellenbecher und der Zellendeckel können beispielsweise aus vernickeltem Tiefziehblech als Stanzziehteile hergestellt werden. Gewöhnlich ist der Zellenbecher positiv gepolt und der Zellendeckel negativ. Der flüssigkeitsdichte Verschluss solcher Zellen erfolgt häufig durch Umbördeln des Randes des Zellenbechers.

Metall-Luft-Zellen weisen eine relativ hohe Energiedichte auf, weil der Bedarf an Sauerstoff an der Kathode durch Luftsauerstoff aus der Umgebung gedeckt werden kann. Entsprechend sind aber gezielte Maßnahmen erforderlich, um der Kathode beim Entladevorgang Sauerstoff aus der Umgebungsluft zuzuführen. Und beim Ladevorgang muss umgekehrt an der Luft-Kathode entstehender Sauerstoff abgeführt werden. Zu diesem Zweck werden die Gehäuse von Metall-Luft-Zellen gezielt mit Eintritts- bzw. Austrittsöffnungen versehen. In der Regel geschieht dies, indem Löcher in die Gehäuse gestanzt werden. Innerhalb der Gehäuse erfolgt die Feinverteilung des eintretenden Luftsauerstoffs üblicherweise über geeignete Membranen oder Filter. So wird das Gehäuse von Zink-Luft-Knopfzellen in aller Regel unter Verwendung eines Zellenbechers gefertigt, in dessen Boden Lufteintrittslöcher gestanzt sind.

Aus der US-6,284,400 sind Metall-Luft-Zellen bekannt, die besonders kleine Lufteintrittslöcher aufweisen. Die Größe der Lufteintrittslöcher wurde reduziert, um dem Eindringen von Luftfeuchtigkeit in die Zelle sowie auch dem Austrocknen der Zelle vorzubeugen.

Zur Fertigung von Zink-Luft-Knopfzellen wird in einen Zellenbecher mit Lufteintrittslöchern ein Filterpapier (oder eine sonstige geeignete mikroporöse Schicht) eingelegt, das den Boden des Bechers und die darin eingestanzten Lufteintrittslöcher abdeckt. Das Filterpapier dient als Mittel zur Feinverteilung von über die Lufteintrittslöcher eintretendem Luftsauerstoff innerhalb der Zelle.

Aus der US-4,118,544 ist eine Knopfzelle mit einem solchen Mittel zur Luftverteilung bekannt. Bei der in dieser Druckschrift beschriebenen Knopfzelle wird der Eintritt von Luft in die Zelle über eine mikroporöse Schicht oder aber durch die Größe der Lufteintrittslöcher reguliert. Die Größe der Poren der mikroporösen Schicht bzw. der Lufteintrittslöcher beschränkt die elektrische Leistung der Zelle. Kurzzeitig sollen die Zelle allerdings auch stärkere Ströme abgegeben können. Dies ist möglich, da in der Zelle - funktionell analog zu dem erwähnten Filterpapier - eine Schicht zur Luftverteilung (air diffusion layer) vorgesehen ist, in der eine gewisse Menge Sauerstoff gespeichert ist.

In der US 2007/0054168 A1 wird beschrieben, dass zwischen einer Luftkathode einer Kink-Luft-Zelle und einem Becherboden mit Lufteintrittsöffnungen eine Elektrolytbarriereschicht sowie ein zusätzlicher scheibenförmiger Platzhalter angeordnet ist.

Auf dem Filterpapier wird anschließend die Luft-Kathode abgelegt, an dem die Reduktion von Luftsauerstoff erfolgen kann. Diese wird wiederum mit einem flächigen Separator abgedeckt, der in der Zelle die Grenzschicht zwischen Anoden- und Kathodenraum bildet. Kombiniert wird ein solches vormontiertes Becherteil in der Regel mit einem napfförmigen Zellenbecher, der mit Zinkpulver oder einem geeigneten anderen reduzierbaren Metall als Anodenmaterial sowie mit Elektrolyt befüllt ist und auf dessen Außenseite eine ringförmige Kunststoffdichtung aufgezogen ist. Dieser wird in den Zellenbecher eingeschoben, so dass die Kunststoffdichtung zwischen den beiden Gehäuseteilen zum Liegen kommt. Durch Umbördeln des endständigen Randes des Zellenbechers über den eingeschobenen Zellendeckel wird die Zelle flüssigkeitsdicht verschlossen.

Der vorliegenden Erfindung lag die Aufgabe zugrunde, eine Metall-Luft-Knopfzelle mit vereinfachtem Aufbau und verbesserter Kapazität bereitzustellen.

Diese Aufgabe wird gelöst durch die Knopfzelle mit den Merkmalen des Anspruchs 1. Bevorzugte Ausführungsformen der erfindungsgemäßen Knopfzelle sind in den abhängigen Ansprüchen 2 bis 6 angegeben. Der Wortlaut sämtlicher Ansprüche wird hiermit durch Bezugnahme zum Inhalt dieser Beschreibung gemacht.

Bei einer erfindungsgemäßen Metall-Luft-Knopfzelle handelt es sich insbesondere um eine Zink-Luft-Knopfzelle, also um eine Knopfzelle, bei der die Anode metallisches Zink enthält oder aus metallischem Zink besteht. An Stelle von Zink kann als elektrochemisches Aktivmaterial z.B. auch Aluminium oder Magnesium zum Einsatz kommen. Die erfindungsgemäße Metall-Luft-Knopfzelle kann sowohl eine primäre als auch eine sekundäre (wiederaufladbare) Metall-Luft-Knopfzelle sein.

Das Gehäuse der erfindungsgemäßen Metall-Luft-Knopfzelle unterscheidet sich grundsätzlich nicht von dem klassischer Knopfzellen, es umfasst die eingangs beschriebenen Komponenten, also einen Zellenbecher, einen Zellendeckel und eine Dichtung. Auf die entsprechenden Ausführungen zu diesen Teilen wird hiermit Bezug genommen.

Weiterhin weist das Gehäuse der erfindungsgemäßen Knopfzelle wie die Gehäuse aus dem Stand der Technik bekannter Knopfzellen Eintrittsöffnungen in Form von Löchern auf, über die Luftsauerstoff in das Gehäuse eintreten kann. Bei diesen Eintrittsöffnungen handelt es sich bevorzugt um Rundlöcher.

Eines der zentralen Merkmale der vorliegenden Erfindung ist, dass zumindest ein Teil der Eintrittsöffnungen bzw. der Löcher im Gehäuse einer erfindungsgemäßen Knopfzelle eine Öffnungsfläche < 0,025 mm², bevorzugt < 0,01 mm², aufweist. Besonders bevorzugt liegt die Öffnungsfläche dieser Eintrittsöffnungen in einem Bereich zwischen 0,00000000785 mm² und 0,00785 mm², insbesondere zwischen 0,0000196 mm² und 0,00709 mm².

Die Gehäuse von klassischen Metall-Luft-Knopfzellen weisen üblicherweise deutlich größere Eintrittsöffnungen auf. So sind Löcher mit Durchmessern von 0,4 mm (entspricht bei im Wesentlichen kreisrunden Löchern einer Fläche von ca. 0,125 mm²) und mehr als Eintrittsöffnungen keine Seltenheit. Diese Löcher wurden bei erfindungsgemäßen Knopfzellen zumindest teilweise durch erheblich kleinere Eintrittsöffnungen ersetzt, was große Vorteile mit sich bringt. Es wurde nämlich gefunden, dass solch kleine Löcher gleichzeitig die Funktion eines Mittels zur Feinverteilung von über die Eintrittslöcher eintretendem Luftsauerstoff übernehmen können. Das beschriebene Einlegen eines Filterpapiers oder eines funktionell gleichwertigen mikroporösen Materials kann bei der Fertigung von erfindungsgemäßen Metall-Luft-Knopfzellen entsprechend entfallen, was den Fertigungsprozess deutlich vereinfacht.

Die in der eingangs erwähnten US-4,118,544 beschriebenen Zink-Luft-Zellen weisen ebenfalls sehr kleine Lufteintrittsöffnungen auf. Nicht erkannt wurde von den Erfindern der in der US-4,118,544 beschriebenen Zellen allerdings, dass durch das Einbringen besonders kleiner Löcher ins Gehäuse ein Verzicht auf die eingangs erwähnte Schicht zur Luftverteilung (air diffusion layer) ermöglicht wird. Durch den Wegfall dieser Schicht steht mehr Innenvolumen für Aktivmaterial zur Verfügung. Die erfindungsgemäße Knopfzelle zeichnet sich insbesondere dadurch aus, dass zwischen den Eintrittsöffnungen im Gehäuse und der Luft-Kathode kein separates, z.B. einem Filterpapier funktional entsprechendes Mittel zur Luftverteilung angeordnet ist. Die Zellen gemäß der vorliegenden Erfindung weisen daher in der Regel eine sehr viel höhere Kapazität als vergleichbare klassische Knopfzellen auf.

Die Gesamtzahl der Eintrittsöffnungen liegt bei einer erfindungsgemäßen Zelle zwischen 1 und 128, bevorzugt zwischen 2 und 48, besonders bevorzugt zwischen 4 und 36, insbesondere zwischen 8 und 32.

Die erfindungsgemäße Knopfzelle weist bevorzugt ausschließlich Eintrittsöffnungen auf, die eine Öffnungsfläche mit den genannten Maßen < 0,025 mm² aufweisen. Es sind allerdings auch Ausführungsformen der erfindungsgemäßen Zelle denkbar, die zusätzlich zu den Eintrittsöffnungen mit der Öffnungsfläche < 0,025 mm² noch eine oder mehrere größere Eintrittsöffnungen mit Öffnungsflächen > 0,025 mm² aufweisen.

Bevorzugt sind die Eintrittsöffnungen in den Boden des Zellenbechers einer erfindungsgemäßen Knopfzelle eingebracht. Eine in den Zellenbecher eingelegte Luft-Kathode kann direkt von eintretendem Luftsauerstoff angeströmt werden. Bevorzugt weist die erfindungsgemäße Knopfzelle eine Luftkathode in Form einer flachen Schicht auf, die den Boden des Zellenbechers, insbesondere die darin eingebrachten Eintrittsöffnungen, derart abdeckt, dass durch die Eintrittsöffnungen eintretender Luftsauerstoff nicht an der Luftkathode vorbei ins Gehäuse eindringen kann.

Die Luftkathode weist die Form einer flachen Schicht auf und liegt unmittelbar auf dem Boden des Zellenbechers auf.

Besonders bevorzugt kommen in erfindungsgemäßen Metall-Luft-Knopfzellen als Luftkathoden kunststoffgebundene Gasdiffusionselektroden in Form von flachen Schichten zum Einsatz. Solche Gasdiffusionselektroden sind beispielsweise in der DE 37 22 019 A1 beschrieben. In solchen Elektroden bildet ein Kunststoffbinder (meist Polytetrafluorethylen, kurz PTFE) eine poröse Matrix aus, in die Partikel aus einem elektrokatalytisch aktiven Material (z.B. aus einem Edelmetall wie Platin oder Palladium oder aus einem Manganoxid) eingelagert sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz, zum Beispiel aus Silber, Nickel oder versilbertem Nickel, eingewalzt werden. Das Metallnetz bildet eine Ableiterstruktur innerhalb der Elektrode und dient als Stromableiter. Alternativ oder zusätzlich kann ein Metallnetz oder Metallgitter auf dem Boden des Zellenbechers einer erfindungsgemäßen Knopfzelle abgelegt werden, bevor die schichtförmige Luftkathode in den Zellenbecher eingelegt wird. Es kann dann als Stromableiter und/oder als der erwähnte Abstandshalter dienen.

Besonders bevorzugt sind die Eintrittsöffnungen im Wesentlichen gleichmäßig über den Boden des Zellenbechers verteilt. Unter einer gleichmäßigen Verteilung soll insbesondere verstanden werden, dass, wenn man den Boden durch eine Gerade in zwei gleich große Bereiche aufteilt, jeder dieser Bereiche eine ähnliche, vorzugsweise die gleiche Anzahl von Eintrittsöffnungen aufweist. Die Anordnung der Eintrittsöffnungen ist dabei grundsätzlich beliebig variierbar. Sie können beispielsweise in Form von konzentrischen Kreisen oder rasterartig angeordnet sein.

Das Gehäuse einer erfindungsgemäßen Knopfzelle, insbesondere einer erfindungsgemäßen Zink-Luft-Knopfzelle, weist in der Regel eine Dicke zwischen 0,08 mm und 0,15 mm auf. Dies gilt insbesondere für den Bereich, der von den Eintrittsöffnungen durchbrochen ist, also insbesondere den Boden des erwähnten Zellenbechers.

Wie oben erwähnt, handelt es sich bei den Eintrittsöffnungen bevorzugt um Rundlöcher. Diese müssen allerdings nicht unbedingt einen konstanten Lochdurchmesser aufweisen. In besonders bevorzugten Ausführungsformen sind die Löcher, ausgehend von der Gehäuseaußenseite, zur Gehäuseinnenseite hin konisch aufgeweitet. Der Lochdurchmesser steigt also von außen nach innen an.

An dieser Stellen noch einige Worte zum Begriff "Öffnungsfläche": Wenn der Querschnitt der Löcher bzw. der Eintrittsöffnungen in Längsrichtung (also von der Gehäuseaußenseite zur Gehäuseinnenseite oder umgekehrt) variiert, so entspricht im Sinne der vorliegenden Anmeldung die Öffnungsfläche dem kleinsten bestimmbaren Querschnitt in Längsrichtung. Ansonsten entspricht die Öffnungsfläche der (konstanten) Querschnittsfläche der Löcher bzw. der Eintrittsöffnungen.

Der kleinste bestimmbare Durchmesser der Löcher bzw. der Eintrittsöffnungen, insbesondere der als Rundlöcher ausgebildeten Eintrittsöffnungen, überschreitet bevorzugt nicht den Grenzwert von 0,15 mm, liegt besonders bevorzugt unter 0,1 mm. Besonders bevorzugt liegt der kleinste bestimmbare Durchmesser der Eintrittsöffnungen in einem Bereich zwischen 0,0001 mm und 0,1 mm, insbesondere zwischen 0,005 mm und 0,095 mm.

Zur Fertigung einer Metall-Luft-Knopfzelle gemäß der vorliegenden Erfindung werden elektrochemische Aktivkomponenten, also beispielsweise die erwähnte Zinkanode und die ebenfalls bereits erwähnte Luft-Kathode, in ein Gehäuse eingeschlossen, das sich dadurch auszeichnet, dass es die beschriebenen, insbesondere als Rundlöcher ausgebildeten Eintrittsöffnungen für Luftsauerstoff mit der Öffnungsfläche < 0,025 mm², bevorzugt < 0,01 mm², aufweist.

So kann z.B. zur Fertigung einer erfindungsgemäßen Zink-Luft-Knopfzelle ein napfförmiger Zellenbecher mit als Rundlöcher ausgebildeten Eintrittsöffnungen im Bodenbereich, die einen Durchmesser zwischen 10 µm und 100 µm aufweisen, bereitgestellt werden. Das Einlegen eines Filterpapiers als Luftsauerstoff-Verteiler kann, wie erwähnt, entfallen. Stattdessen wird der Innenboden des Zellenbechers bevorzugt unmittelbar mit einer flachen Luftkathodenschicht abgedeckt, an der die Reduktion von über die Eintrittsöffnungen herangeführtem Luftsauerstoff erfolgen kann. Ansonsten kann verfahren werden wie aus dem Stand der Technik bekannt.

Die Eintrittsöffnungen für Luftsauerstoff mit einer Öffnungsfläche < 0,025 mm² werden besonders bevorzugt mittels eines Lasers in das Gehäuse geschmolzen. Bei den Eintrittsöffnungen des Gehäuses einer erfindungsgemäßen Zelle handelt es sich also bevorzugt um in das Gehäuse eingeschmolzene Rundlöcher und nicht um gestanzte Löcher. Sie weisen entsprechend auch nicht zwingend eine kreisrunde Form auf. Die oben erwähnte Konusform kann dabei erhalten werden, indem die Öffnungen von der Seite aus in das Gehäuse eingebracht werden, die in der fertigen Zelle die Innenseite des Gehäuses bildet.

Geeignete Laser sind beispielsweise kommerziell erhältliche Faserlaser, also Festkörperlaser, bei denen der dotierte Kern einer Glasfaser das aktive Medium bildet. Die Betriebsparameter des Laser müssen möglichst exakt an die Dicke des Gehäuses angepasst werden, in das die Eintrittsöffnungen eingebracht werden sollen. Die Leistung lässt sich beispielsweise durch Variation der Pulsfrequenz des Lasers modulieren.

Die genannten und weitere Vorteile der Erfindung ergeben sich insbesondere auch aus der nun folgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

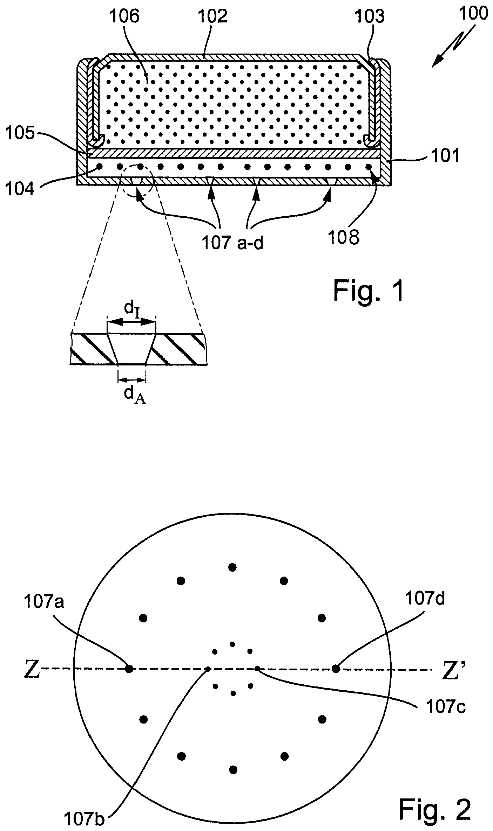

**Fig. 1** zeigt schematisch den Querschnitt einer erfindungsgemäßen Metall-Luft-Knopfzelle **100.** Dargestellt sind der napfförmige Zellenbecher **101,** der darin eingeschobene, ebenfalls napfförmige Zellendeckel **102,** und die dazwischen angeordnete Kunststoffdichtung **103,** aus denen das Gehäuse der erfindungsgemäßen Zelle gebildet ist. Die Dichtung **103** trennt den Zellenbecher **101** und den Zellendeckel **102** räumlich und elektrisch voneinander. Das Gehäuse weist eine zylindrische Form auf. Stirnseitig wird das Gehäuse durch die Böden des Zellenbechers **101** und des Zellendeckels **102** begrenzt, mantelseitig durch den umlaufenden Mantel des Zellenbechers **101.**

Die Luft-Kathode **104** ist in der Zelle **100** als dünne Schicht enthalten, die den Boden des Zellenbechers **101** vollständig abdeckt. Die Kathodenschicht liegt dabei direkt und unmittelbar auf dem Innenboden des Zellenbechers **101** auf. Sie umfasst eine poröse Matrix aus einem Kunststoff, in dem ein Katalysator dispergiert ist. Ein Metallnetz **108** bildet innerhalb der Matrix eine Ableiterstruktur. Oberhalb der Kathodenschicht **104** ist der flächige Separator **105** abgebildet. Dieser trennt die Luft-Kathode **104** vom Anodenraum **106** der Zelle **100.** In diesen ist als Aktivmaterial ein Metallpulver, insbesondere Zink, eingebracht.

In den Boden des Zellenbechers **101** sind mittels eines Lasers die Eintrittsöffnungen **107a-d** eingeschmolzen. Die beiden außenliegenden Eintrittsöffnungen weisen dabei größere Durchmesser auf als die beiden zentral angeordneten. Eine der Eintrittsöffnungen ist vergrößert dargestellt (nicht maßstabsgetreu). Zu erkennen ist, dass die Eintrittsöffnung zur Gehäuseinnenseite hin von außen kommend konisch aufgeweitet ist. Die Eintrittsöffnung weist also keinen konstanten Durchmesser auf. Der Durchmesser der konisch ausgebildeten Eintrittsöffnung beträgt an der Außenseite ca. 15 µm (d_{A}), an der Innenseite dagegen ca. 60 µm (d_{I}). Das Gehäuse des dargestellten Zellenbechers weist im Bodenbereich eine Dicke von ca. 130 µm auf. Davon ausgehend, dass die Eintrittsöffnung an der Außenseite (wo der Querschnitt am kleinsten ist) einen kreisrunden Querschnitt aufweist, lässt sich die Öffnungsfläche der Eintrittsöffnung berechnen, sie beträgt ca. 0,0001767 mm².

In **Fig. 2** ist eine Draufsicht auf den Boden der in Fig. 1 im Querschnitt dargestellten Zelle **100** abgebildet. Bei dem Boden handelt es sich um eine der zwei Stirnseiten der Zelle **100,** die zweite wird vom Boden des in den Zellenbecher **101** eingeschobenen Zellendeckels **102** gebildet. Der Schnitt der in Fig. 1 dargestellten Zelle **100** erfolgte entlang der Linie Z-Z'. Zu erkennen sind insgesamt 20 Eintrittsöffnungen für Luftsauerstoff, darunter die in der geschnittenen Darstellung in Fig. 1 abgebildeten Eintrittsöffnungen **107a-d.** Die 20 Eintrittsöffnungen sind in Form von zwei konzentrisch angeordneten Kreisen gleichmäßig über den Zellenboden verteilt. Dabei weisen die Eintrittsöffnungen des inneren Kreises geringere Öffnungsflächen und Durchmesser auf als die Eintrittsöffnungen des äußeren Kreises.

## Patentansprüche

1. Metall-Luft-Knopfzelle, insbesondere Zink-Luft-Knopfzelle, umfassend als elektrochemische Aktivkomponenten eine metallhaltige Anode und eine Luft-Kathode und ein diese umschließendes Gehäuse mit zwischen 1 und 128 Eintrittsöffnungen, über die Luftsauerstoff in das Gehäuse eintreten kann, wobei das Gehäuse einen Zellenbecher und einen Zellendeckel aufweist und die Eintrittsöffnungen in den Boden des Zellenbechers eingebracht sind und wobei zumindest ein Teil der Eintrittsöffnungen eine Öffnungsfläche < 0,025 mm², bevorzugt < 0,01 mm², aufweist, und wobei die Luftkathode die Form einer flachen Schicht aufweist und unmittelbar auf dem Boden des Zellenbechers aufliegt.

2. Knopfzelle nach Anspruch 1, **dadurch gekennzeichnet, dass** die Eintrittsöffnungen gleichmäßig über den Boden des Zellenbechers verteilt sind.

3. Knopfzelle nach Anspruch 1 oder Anspruch 2, **dadurch gekennzeichnet, dass** die Gesamtzahl der Eintrittsöffnungen zwischen 2 und 48, besonders bevorzugt zwischen 4 und 36, insbesondere zwischen 8 und 32, liegt.

4. Knopfzelle nach einem der vorhergehenden Ansprüche, **dadurch gekennzeichnet, dass** das Gehäuse Eintrittsöffnungen mit unterschiedlich großen Öffnungsflächen aufweist.

5. Knopfzelle nach einem der vorhergehenden Ansprüche, **dadurch gekennzeichnet, dass** das Gehäuse eine Gehäusedicke zwischen 0,08 und 0,15 mm aufweist, insbesondere in dem Bereich, der von der Eintrittsöffnungen durchbrochen ist.

6. Knopfzelle nach einem der vorhergehenden Ansprüche, **dadurch gekennzeichnet, dass** sich die Eintrittsöffnungen zur Gehäuseinnenseite hin von außen konisch aufweiten.

## Claims

1. Metal-air button cell, in particular a zinc-air button cell, comprising a metal-containing anode and an air cathode as the electrochemical active components and a housing which encloses them and has between 1 and 128 inlet openings via which atmospheric oxygen can enter the housing, wherein the housing comprises a cell cup and a cell lid and the inlet openings are made in the bottom of the cell cup, and wherein at least some of the inlet openings have an opening surface area of < 0.025 mm², preferably < 0.01 mm², and wherein the air cathode has the form of a flat layer and rests directly on the bottom of the cell cup.

2. Button cell according to Claim 1, **characterized in that** the inlet openings are evenly distributed over the bottom of the cell cup.

3. Button cell according to Claim 1 or Claim 2, **characterized in that** the total number of inlet openings lies between 2 and 48, particularly preferably between 4 and 36, in particular between 8 and 32.

4. Button cell according to one of the preceding claims, **characterized in that** the housing has inlet openings with opening surface areas of different sizes.

5. Button cell according to one of the preceding claims, **characterized in that** the housing has a housing thickness of between 0.08 and 0.15 mm, in particular in the region that is perforated by the inlet openings.

6. Button cell according to one of the preceding claims, **characterized in that** the inlet openings widen conically from the outside towards the inner side of the housing.

## Revendications

1. Pile bouton métal-air, en particulier pile bouton zinc-air, comprenant comme composants actifs électrochimiques une anode contenant un métal et une cathode d'air et un boîtier entourant celles-ci avec entre 1 et 128 ouvertures d'entrée, par lesquelles l'oxygène de l'air peut pénétrer dans le boîtier, dans laquelle le boîtier présente un godet de pile et un couvercle de pile et les ouvertures d'entrée sont pratiquées dans le fond du godet de pile et dans laquelle au moins une partie des ouvertures d'entrée présente une surface d'ouverture < 0,025 mm², de préférence < 0,01 mm², et dans laquelle la cathode d'air présente la forme d'une couche plate et repose directement sur le fond du godet de pile.

2. Pile bouton selon la revendication 1, **caractérisée en ce que** les ouvertures d'entrée sont réparties uniformément sur le fond du godet de pile.

3. Pile bouton selon la revendication 1 ou la revendication 2, **caractérisée en ce que** le nombre total des ouvertures d'entrée se situe entre 2 et 48, de préférence particulièrement entre 4 et 36, en particulier entre 8 et 32.

4. Pile bouton selon l'une quelconque des revendications précédentes, **caractérisée en ce que** le boîtier présente des ouvertures d'entrée avec des surfaces d'ouverture de différentes grandeurs.

5. Pile bouton selon l'une quelconque des revendications précédentes, **caractérisée en ce que** le boîtier présente une épaisseur de boîtier comprise entre 0,08 et 0,15 mm, en particulier dans la région qui est perforée par les ouvertures d'entrée.

6. Pile bouton selon l'une quelconque des revendications précédentes, **caractérisée en ce que** les ouvertures d'entrée s'évasent en forme de cône depuis l'extérieur en direction du côté intérieur du boîtier.
